# EUROPEAN PATENT SPECIFICATION

(11) **EP 0 577 170 B1**
(45) Date of publication and mention of the grant of the patent: **15.01.1997**
(21) Application number: 93201636.3
(22) Date of filing: 08.06.1993
(51) Int. Cl.: G01G 19/40, A47F 9/02

(54) **An arrangement with a weighing apparatus for cash check-out centers**
Vorrichtung für Kassenzentrale mit einer Waage
Dispositif de caisse avec balance

(30) Priority: 02.07.1992 SE 9202050
(43) Date of publication of application: 05.01.1994
(73) Proprietor: STENESTAMS INDUSTRI AB, S-544 21 Hjo (SE)
(72) Inventor: Claesson, Karl-Göte, S-544 31 Hjo (SE)
(74) Representative: Wallengren, Yngvar

(56) References cited:
- EP-A- 0 401 794
- GB-A- 1 602 023
- US-A- 4 564 077
- US-A- 4 582 151
- US-A- 5 046 570

## Description

The present invention relates to an arrangement at cash check-out centres having an infeed conveyor for goods, at least one discharge conveyor for goods, and possibly an intermediate conveyor therebetween.

### BACKGROUND ART

An arrangement of the type disclosed by way of introduction is previously known from Swedish Patent Application No. 8904214-7. In the design and construction according to this publication, there is disposed, between the discharge end of an infeed conveyor and the infeed end of a discharge conveyor, an intermediate conveyor in the area immediately in front of the person working the check-out centre. This intermediate conveyor is moveably suspended in the vertical direction on a weighing apparatus so that goods passed over the intermediate conveyor can be weighed directly thereon.

The design and construction according to this patent publication permits convenient weighing of the goods but is, nevertheless, flawed in that there is no space provided for suitable siting of the cash box which the cashier must often use. Thus, there is an imminent risk of occupational injury in the use of a cash register of the type disclosed in the above-mentioned patent publication.

### PROBLEM STRUCTURE

The present invention has for its object to realise an arrangement of the type disclosed by way of introduction, the arrangement being devised in such a manner that it combines convenient weighing of goods with an ideal positioning of a cash box from the ergonomic point of view. The present invention also has for its object to devise an arrangement which is simple and economical in manufacture and which offers the best conceivable working environment for the person operating the cash register.

### SOLUTION

The objects forming the basis of the present invention will be attained if the arrangement mentioned by way of introduction is also characterized in that a cash box is placed in the extension of the infeed conveyor between this conveyor and the discharge conveyor, and that at least a portion or a section of the lid of the cash box is connected to a transducer for weighing such goods as are passed over the cash box or the section thereof from the infeed conveyor to the discharge conveyor.

By employing, in this manner, the lid of the cash box or a section thereof, as weighing platform, the major advantage will be afforded that both the cash box and the weighing apparatus will be placed in the transport line for goods within the ergonomical working space in front of the person operating the check-out centre.

Further advantages will be attained if the present invention is also given one or more of the characterizing features as set forth in appended Claims 2 to 6.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: shows a cash check-out point according to the present invention, seen straight from above;

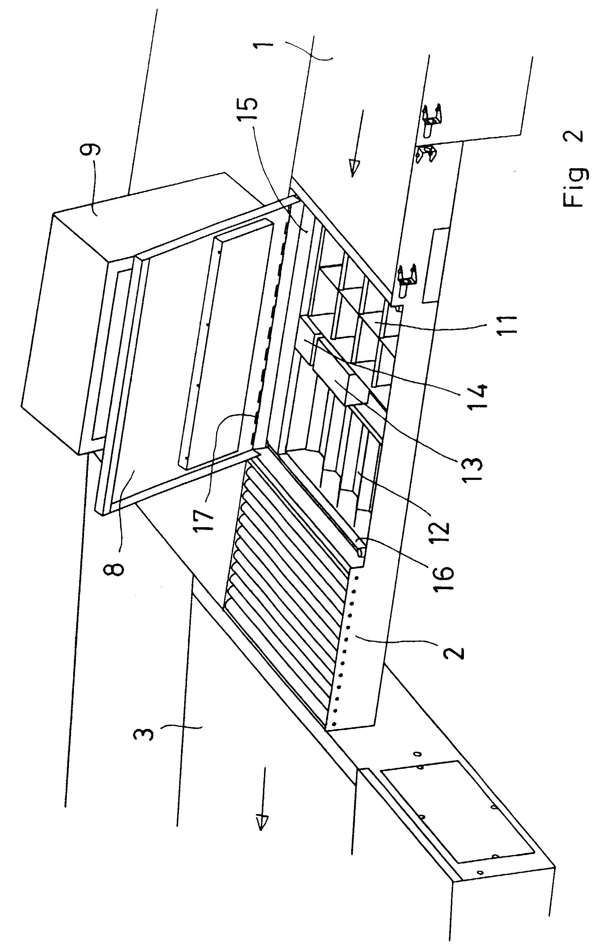

- Fig. 2: is a partial section of the cash check-out point according to Fig. 1, seen in perspective; and
- Fig. 3: is a view straight from above of the region at the cash box with its lid raised.

### DESCRIPTION OF PREFERRED EMBODIMENT

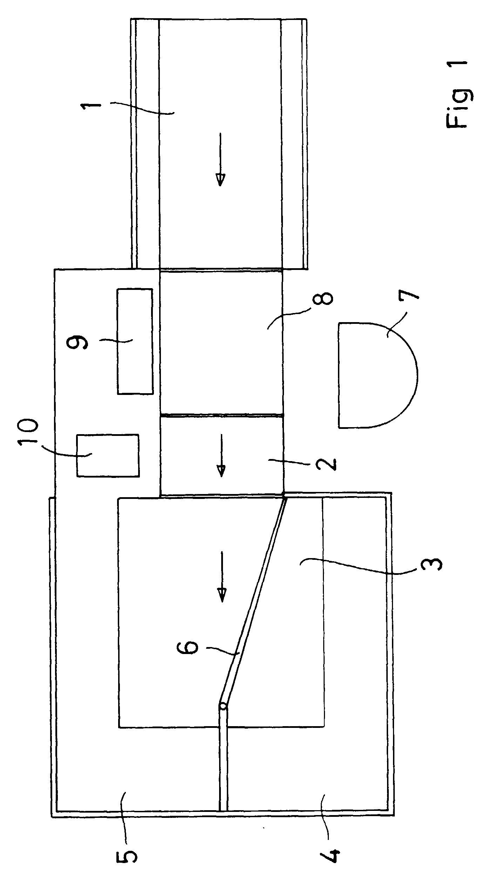

It will be apparent from Fig. 1 that the cash check-out point has an infeed conveyor 1 on which goods, or purchases, are placed. In the transport direction after the infeed conveyor 1 as shown by means of the arrows in the Figure, the cash check-out point has an intermediate conveyor 2 and, thereafter, a discharge conveyor 3. The discharge conveyor 3 is designed so as optionally to be able to move purchases to either of the packing stations 4 and 5 or possibly several packing stations, if present, by switching a pivotal arm or flap 6.

In the region straight ahead of the chair 7 where the operator is to sit, there is provided a plate 8 which may be provided with a roller conveyor on its upper face. This plate is mechanically coupled to a transducer to a weighing apparatus so that thereby the plate may form a weighing platform located straight ahead of the operator seated on the chair 7.

In connection with the weighing platform 8, there may further be provided a scanner 9 whose purpose is to read-off such bar codes on goods transported past the scanner as indicate the price and/or weight of the goods. Furthermore, the cash check-out centre has a printer 10 for receipts.

It will be apparent from the foregoing that the weighing platform is disposed in the transport line of those goods which pass through the cash check-out centre. Thus, it is not necessary to execute any displacement of the goods transversely of their transport direction for carrying out requisite weighing of the goods. Furthermore, the platform 8 is placed in direct connection with the discharge end of the infeed conveyor 1 and in direction connection with the infeed end of the intermediate conveyor 2.

In such situations in which the intermediate conveyor 2 has been dispensed with, the platform 8 may be disposed in direct association with the infeed end of the discharge conveyor 3.

It will also be apparent from the Drawing that, in the lateral direction, the platform 8 is of substantially the same width as the infeed conveyor 1 and the intermediate conveyor 2.

According to the present invention, the platform 8 serves as a lid for a cash box disposed under the platform and provided with inserts 11 and 12 for banknotes and coins. These inserts 11 and 12 rest on a lower defining plate included in the frame of the cash check-out centre or other suitable carrier and are, therefore stationary, but may be lifted up out of the illustrated space.

Beneath a hood 13 between the two inserts 11 and 12, there is disposed a transducer to a weighing apparatus, as well as the anchorage thereof in a stationary frame portion 21 included in the bearing structure of the check-out centre. The opposite side of the transducer 19 is connected, via an anchorage 14, to a rotationally rigid, tubular beam 15 which, in its ends, has bracket arms 16 directed towards the operator. Furthermore, the beam 15 serves for fixing the distal edge of the lid 8 in relation to the operator via a pivot member 17.

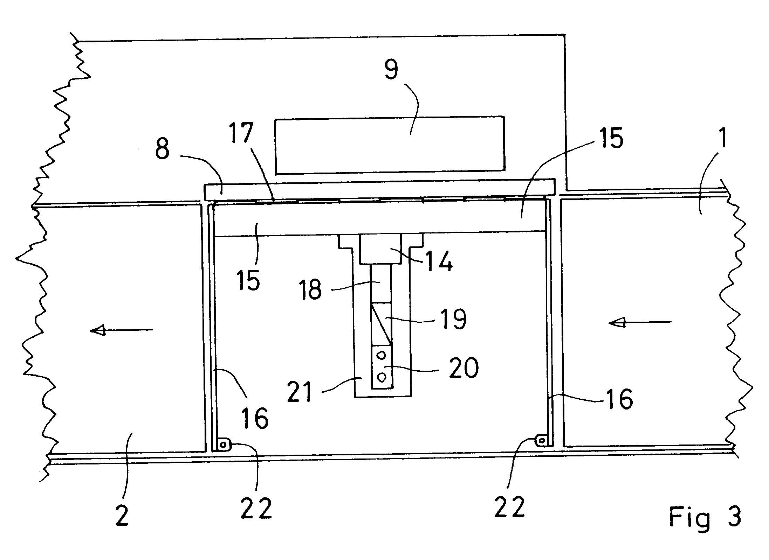

Fig. 3 shows the above-mentioned details on a larger scale and it will be apparent that the anchorage 14 is, via a connecting portion 18, connected to the transducer 19 of the weighing apparatus, the transducer being, on the opposite side, connected to a further connecting portion 20 which, in its turn, is secured in a carrier 21 rigidly fixed in the frame of the check-out centre. On loading of the weighing platform 8 in the lowered position, this rests on the two bracket arms 16 and, via the pivot member 17, on the beam 15. These components are, via the anchorage 14 and the connecting portion 18, the transducer 19 and the connecting portion 20, only supported by the carrier 21 so that thereby a loading of the weighing platform 8 will actuate the transducer 19. In certain embodiments, the transducer is larger so that it is secured with its one end in the anchorage 14 of the beam 15 and, with its other end, in the carrier 21.

In order to prevent overloading of the transducer 19, the bracket arms 16 are provided with adjustment screws or other adjustable setting devices 22 by means of which the size of the obtainable downward pressure on the bracket arms 16 is adjusted. To this end, the lower ends of the adjustment screws 22 are located at adjustable distances above corresponding abutment surfaces in the cash check-out point desk.

In order, as far as possible, to avoid oblique loading of the transducer 19, the transducer is placed in such a manner that it is localized at the region of the point of intersection of the diagonals of the weighing platform 8.

### DESCRIPTION OF ALTERNATIVE EMBODIMENTS

In the above-described embodiment, the beam 15 was placed with its longitudinal direction parallel with the transport direction of the check-out point. According to the present invention, it is also possible to place the beam 15 transversely directed in relation to the transport direction so that thereby the beam will be located beneath the left-hand or right-hand edge (as the arrangement is shown on the Drawings) of the weighing platform 8. Also in such an embodiment, the transducer 19 should be placed beneath the central region of the weighing platform 8.

In the foregoing, the support means on which the weighing platform or lid 8 of the cash box rests has been described as consisting of a beam 15 with two projecting bracket arms 16. According to the present invention, the free ends of the bracket arms 16 can be connected to one another so that thereby a closed frame is formed beneath the edge portion of the weighing platform 8.

According to the present invention, it may also be possible to place the beam 15 in the central region of the weighing platform 8 so that thereby the bracket arms 16 or the frame are divided into two equally large halves. In such an alternative, the beam 115 may be open downwards in the region of the connecting portion 20, while, on the other hand, the transducer 19 and the connecting portion 18 may be placed interiorly in the beam.

In the above disclosure, the weighing platform 8 has been described as constituting the entire lid of the cash box. According to the present invention, this is not necessary, but the weighing platform may instead constitute a part or a section of the lid.

## Claims

1. An arrangement at cash check-out centres having an infeed conveyor (1) for goods, at least one discharge conveyor (3) for goods, and possibly an intermediate conveyor (2) therebetween, **characterized in that** a cash box is placed in the extension of the infeed conveyor (1) between this conveyor and the discharge conveyor (3); **and that** at least a portion or a section of the lid (8) of the cash box is connected to a transducer (19) for weighing such goods as are passed over the cash box or the section thereof from the infeed conveyor (1) to the discharge conveyor (3).

2. The arrangement as claimed in Claim 1, **characterized in that** the cash box is disposed in connection with the discharge end of the infeed conveyor (1).

3. The arrangement as claimed in Claim 1 or 2, **characterized in that** the cash box is disposed in connection with the infeed end of the discharge conveyor (3).

4. The arrangement as claimed in any one of Claims 1 to 3, **characterized in that** the cash box has substantially the same width as the infeed conveyor (1).

5. The arrangement as claimed in any one of Claims 1 to 4, **characterized in that** the lid (8) of the cash box is, by means of a pivot member (17), pivotally connected to a frame or a carrier (15, 16) which, via the transducer (19), is connected to the frame (21) of the check-out centre; **and that** the edge portion of the lid facing away from the pivot member (17) is, in the closed position of the lid, supportable against the carrier.

6. The arrangement as claimed in any one of Claims 1 to 5, **characterized in that** the transducer (19) is placed in the region of the point of intersection of the diagonals of the lid (8) of the cash box.

## Patentansprüche

1. Anordnung an Kassenzentralen mit einer Vorschubförderanlage (1) für Artikel, wenigstens einer Abgabeförderanlage (3) für Artikel und möglicherweise dazwischen mit einer Zwischenförderanlage (2), **dadurch gekennzeichnet**, daß in der Verlängerung der Vorschubförderanlage (1) zwischen dieser Förderanlage und der Abgabeförderanlage (3) eine Geldkassette liegt, **und daß** wenigstens ein Teil oder Abschnitt des Deckels (8) der Geldkassette mit einem Wandler (19) zum Wägen der Artikel verbunden ist, die von der Vorschubförderanlage (1) über die Geldkassette zu der Abgabeförderanlage (3) laufen.

2. Anordnung nach Anspruch 1, **dadurch gekennzeichnet, daß** die Geldkassette in Verbindung mit dem Abgabeende der Vorschubförderanlage (1) angeordnet ist.

3. Anordnung nach Anspruch 1 oder 2, **dadurch gekennzeichnet, daß** die Geldkassette in Verbindung mit dem Vorschubende der Abgabeförderanlage (3) angeordnet ist.

4. Anordnung nach einem der Ansprüche 1 bis 3, **dadurch gekennzeichnet, daß** die Geldkassette im wesentlichen genauso breit wie die Zufuhrförderanlage (1) ist.

5. Anordnung nach einem der Ansprüche 1 bis 4, **dadurch gekennzeichnet, daß** der Deckel (8) der Geldkassette mittels eines Schwenkelements (17) schwenkbar mit einem Rahmen oder Träger (15, 16) verbunden ist, der über den Wandler (19) mit dem Rahmen (21) der Kassenzentrale verbunden ist, **und daß** der von dem Schwenkelement (17) abgewandte Kantenabschnitt des Deckels in der geschlossenen Position des Deckels gegen den Träger anzulegen ist.

6. Anordnung nach einem der Ansprüche 1 bis 5, **dadurch gekennzeichnet, daß** der Wandler (19) im Bereich des Schnittpunkts der Diagonalen des Deckels (8) der Geldkassette angeordnet ist.

## Revendications

1. Agencement de centres de paiement de sortie, comprenant un transporteur (1) d'amenée de marchandises, au moins un transporteur (3) d'évacuation des marchandises, et éventuellement un transporteur intermédiaire (2) entre les transporteurs précédents, caractérisé en ce qu'un coffret de caisse est placé dans le prolongement du transporteur d'amenée (1), entre ce transporteur et le transporteur d'évacuation (3), et en ce qu'au moins une partie ou une section du couvercle (8) du coffret de caisse est reliée à un transducteur (19) de pesée de ces marchandises lorsqu'elles passent au-dessus du coffret de caisse ou de sa partie comprise entre le transporteur d'amenée (1) et le transporteur d'évacuation (3).

2. Agencement suivant la revendication 1, caractérisé en ce que le coffret de caisse est disposé en connexion avec l'extrémité de sortie du transporteur d'amenée (1).

3. Agencement suivant la revendication 1 ou 2, caractérisé en ce que le coffret de caisse est disposé en connexion avec l'extrémité d'entrée du transporteur d'évacuation (3).

4. Agencement suivant une quelconque des revendications 1 à 3, caractérisé en ce que le coffret de caisse a sensiblement la même largeur que le transporteur d'amenée (1).

5. Agencement suivant une quelconque des revendications 1 à 4, caractérisé en ce que le couvercle (8) du coffret de caisse est relié de façon pivotante au moyen d'une charnière (17) à un cadre ou un support (15,16) qui est relié par l'intermédiaire du transducteur (19) au châssis (21) du centre de paiement de sortie ; et en ce que le bord du couvercle à l'opposé de la charnière (17) peut être supporté, dans la position fermée du couvercle, par ledit support.

6. Agencement suivant une quelconque des revendications 1 à 5, caractérisé en ce que le transducteur (19) est placé dans la région du point d'intersection des diagonales du couvercle (8) du coffret de caisse.
